# EUROPEAN PATENT SPECIFICATION

(11) **EP 2 130 688 B1**
(45) Date of publication and mention of the grant of the patent: **27.04.2011**
(21) Application number: 08075491.4
(22) Date of filing: 15.05.2008
(51) Int. Cl.: B60B 35/08, B60G 9/00, B60G 11/113, B60G 11/46

(54) **Axle suspension of a vehicle.**
Achsenaufhängung für ein Fahrzeug
Suspension d'essieu d'un véhicule

(43) Date of publication of application: 09.12.2009
(73) Proprietor: Weweler Nederland B.V., 7332 AP Apeldoorn (NL)
(72) Inventor: Aalderink, Derk Geert, 7245 NV Laren (NL)
(74) Representative: Houben, Christiaan Hein Willem Frans

(56) References cited:
- EP-A- 1 334 848
- EP-A- 1 508 459
- EP-A- 1 894 754
- DE-A1- 19 946 802

## Description

The invention relates to a wheel axle suspension of a vehicle, for example a trailer, comprising an axle body and a suspension arm extending in longitudinal direction of the vehicle and crossing the axle body substantially perpendicular. Such an axle suspension is for instance known from DE 199 46 802 A1. The known suspension has a suspension arm having a curved portion at the location of the axle body, said axle body being arranged on the concave underside of the curved portion of the suspension arm. The known axle suspension further comprises a support part which is located between the axle body and the suspension arm, said support part having a recess in which a portion of the axle body is received, and having a side facing the suspension arm which is substantially adapted to the shape of the concave underside of the curved portion of the suspension arm.

It is an object of the invention to provide an axle suspension of a vehicle with an improved clamping together of the axle body, the curved plate, the support part and the suspension arm.

This object is achieved by an axle suspension according to claim 1.

The clamping action of the clamping means introduces mechanical stresses in the clamped materials. The curved plate is made from ductile material to evenly spread the mechanical stresses on the surfaces of the support part and the suspension arm that face each other. Due to the clamping action, the ductile curved plate adapts its shape to the surface roughness of the support part and suspension arm and will therefore make contact with generally the entire available surface area. The mechanical stresses are now spread more evenly across the entire surface area. This improves the clamping and at the same time extends the technical lifetime of the axle suspension. If the curved plate would not be present, the mechanical stresses would be concentrated in individual spots where the two surfaces touch each other. These spots are the result of the surface roughness and hardness of the suspension arm and support part. Especially in dynamically loaded structures like the suspension arm and the axle body, it is preferred to keep the mechanical stresses as evenly spread across the entire available surface as possible. The use of the ductile plate provides that spreading.

The protrusions on the support part provide a first surface area which is engageable with a second surface area of the corresponding cut outs of the curved plate, so that is prevented that the curved plate can move to a position wherein clamping together the axle body, support part, curved plate, and suspension arm fails. Engagement of the first surface area of the protrusions with the second surface area of the cut outs fixates the curved plate in three degrees of freedom, two translations and one rotation about a vertical axis, the other three degrees of freedom, being one translation and two rotations about horizontal axes, are fixated by the clamping action of the clamping means.

Preferably, the shape of the protrusions and the corresponding cut outs is substantially rectangular. Each pair of opposite sides of the protrusions then corresponds to two perpendicular translations. It has the advantage that stresses on a side of the protrusions or cut outs are evenly spread across the side. It is also conceivable that other shapes are used.

In an embodiment the support part comprises a shell shaped as a cylinder section which has an inner radius of curvature which is corresponding substantially with the radius of the axle body and which on the side facing the suspension arm in the region near the tangential ends is provided at each tangential end with a nose such that said side is substantially matched with the concave underside of the curved portion of the suspension arm. The noses on the support part increase the clamping action of the clamping means at the tangential ends of the support part and thereby more effectively clamp the support part and the axle body together. The result is that the clamping action on the curved plate is higher at the two tangential ends of the curved plate than in the middle of the curved plate. During braking of the vehicle and/or roll movement of the vehicle, it occurs that the clamping action at one tangential end of the curved plate increases and at the same time the clamping action on the other tangential end of the curved plate decreases. The curved plate is then mainly clamped at one tangential end of the curved plate. Relative movement of the suspension arm with respect to the support part will tend to pull the curved plate from its position between the suspension arm and the support part, thereby loosening the clamping fixation. Engagement of the first surface area of the protrusions with the second surface area of the cut outs fixates the curved plate such that is assured that the curved plate remains between the noses on the support part and the suspension arm, thereby assuring that a good clamping remains under dynamic loads on the axle and the suspension arm.

In an embodiment, the bearing surface of the protrusions is bearing against the underside of the suspension arm. The result of this is that the support part, at the location of the bearing surface, is clamped directly against the suspension arm. This will eliminate further the relative movement between the suspension arm and the support part and thereby reduces the "pulling load" on the curved plate. It also prevents the curved plate to squeeze itself between the protrusions of the support arm and the suspension arm.

Preferably, on either side of the vertical plane through the central axis of the axle body at least one of said protrusions is provided on the support part and the curved plate is provided with at least one of said corresponding cut outs.

If a protrusion and corresponding cut out would only be present at one side of the vertical plane, a decrease in clamping action at that side could result in a curved plate that squeezes between the protrusion on the support plate and the suspension arm. Having a protrusion and corresponding cut out on both sides, ensures that always one is capable of preventing the curved plate to squeeze between the protrusions on the support plate and the suspension arm. An additional advantage is that the engageable surfaces of the protrusions and the corresponding cut outs are increased with lower mechanical stresses in the curved plate due to a tendency to move as a result.

In a further embodiment of the invention, the support part and/or the curved plate are symmetrical with respect to the vertical plane through the central axis. This has the advantage that assembly of the axle suspension is easier and mistakes are prevented.

Preferably, the curved part is made of zinc or another anti-corrosive material in order to prevent stress corrosion cracking and/or to prevent the curved plate from oxidation and thereby from possible attenuation of material properties, eventually leading to failure of the clamping action.

The invention further relates to a vehicle, for instance a trailer, comprising at least one axle suspension as described above.

In the following description the invention will be explained in more detail with reference to the drawing, in which:
- Fig. 1: shows a side view of a preferred embodiment of a wheel axle suspension according to the invention with pneumatic spring system of a vehicle, mounted on a chassis beam of a vehicle,
- Fig. 2: shows on an enlarged scale, the section of the axle suspension of Fig. 1 where the axle body, support part, curved plate and suspension arm are clamped together by the clamping means, and
- Fig. 3: shows in a perspective view an axle body with corresponding support part and curved part of the suspension of Fig. 1.

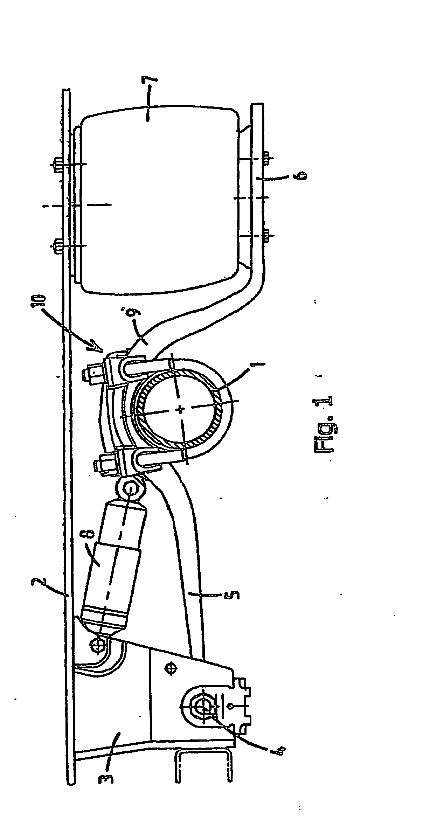

In Figure 1, the axle body of the wheel axle is designated by reference numeral 1. The vehicle comprises a carrying bracket 3 which is attached to a chassis beam 2, which is illustrated highly diagrammatically in Figure 1. The suspension arm 5 is pivotably attached to the carrying bracket 3 at the attachment point 4. A pneumatic spring 7 is arranged between the free end 6 of suspension arm 5 at a distance from attachment point 4 and the chassis beam 2. A shock absorber 8 is fitted between the carrying bracket 3 and suspension arm 5.

The suspension arm 5, which crosses the axle body 1 substantially perpendicular, has an upwardly curved section 9 at the location of the axle body 1. The axle body 1 is arranged on the underside of the suspension arm 5 in the cavity of the curved section 9 and is connected to the suspension arm 5 by clamping means 10.

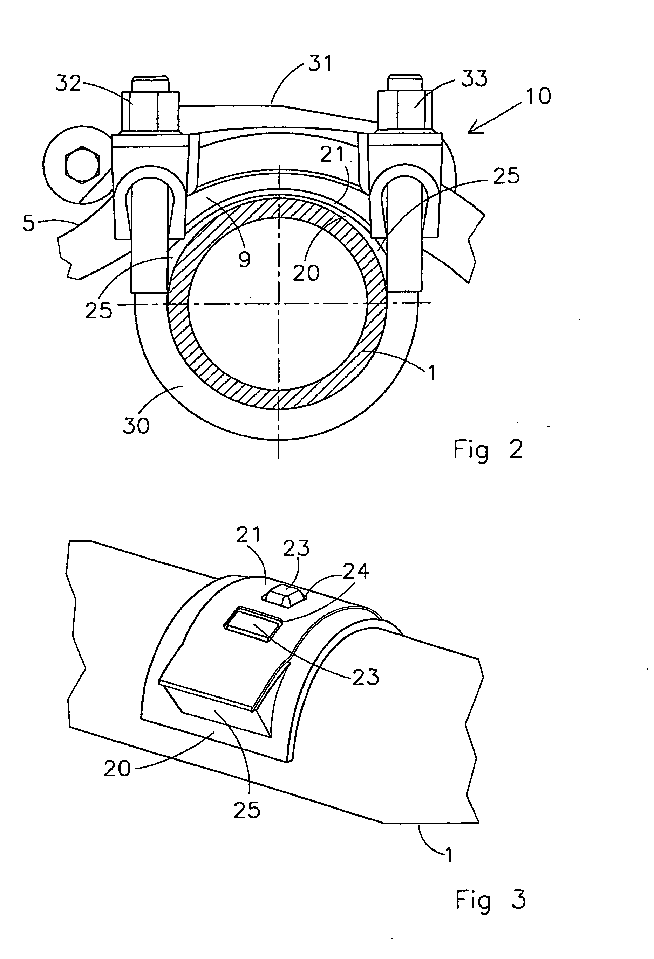

In Figure 2 is shown an enlarged view of the axle suspension at the location where the axle body is connected to the suspension arm 5 by clamping means 10. Between axle body 1 and suspension arm 5 is located a support part 20. In this embodiment, support part 20 comprises a shell with a concave side for receiving a portion of the axle body 1, and a convex side facing the suspension arm 5 . The concave side of the support part 20 is substantially adapted to the shape of the portion of the axle body 1. The convex side, having noses 25 at the tangential ends of the support part 20, is substantially adapted to the underside of the curved portion 9 of the suspension arm. Between the support part 20 and suspension arm 5 is located a curved plate 21, made from ductile material, and with a shape adapted to the underside of the curved portion 9 of the suspension arm 5.

The axe body 1, support part 20, curved plate 21, and suspension arm 5 are clamped together by clamping means 10 which comprise in this example a U-shaped bolt 30 and clamping plate 31. The clamping plate 31 is arranged on top of the suspension arm, the U-shaped bolt 30 is arranged around the axle body and interacts with clamping plate 31 by nuts 32 and 33. Tightening of nuts 32 and 33 results in a clamping action of the clamping plate 31 and U-shaped bolt 30. It is conceivable that for clamping means 10 other solutions also suffice.

The clamping action of clamping means 10 result in mechanical stresses in the axle body 1, support part 20, curved plate 21, and suspension arm 5, especially at the boundary surfaces between these parts. The curved plate 21 ensures that the mechanical stresses between suspension arm 5 and support part 20 are substantially evenly spread across the entire available engagement surface between suspension arm 5 and support part 20. This is achieved by using a material that is able to deform, preferably ductile, and adapts itself to the surface of both the suspension arm 5 and the support part 20, thereby increasing the contact area between the two surfaces and spread the mechanical stresses.

If no ductile curved plate 21 would be present, the surface of the support part 20 would engage directly with the surface on the underside of the curved portion 9 of the suspension arm 5. Because of the surface roughness of both parts and the hardened material these parts are normally made off, the surfaces only make contact with each other on a part of the available engagement surface. The mechanical stresses would then be distributed over a smaller surface area. In a dynamically loaded structure, like the wheel axle suspension, it is desired to keep the mechanical stresses as low as possible and as evenly spread as possible. This will improve the clamping action and the technical lifetime of the axle suspension.

Figure 3 shows the axle body 1 with arranged on the axle body 1 the support part 20 and curved plate 21. In this Figure, it can be clearly seen that the support part 20 comprises protrusions 23 and that curved plate 21 comprises corresponding cut outs 24 in which the protrusions 23 are received. The protrusions 23 provide a first surface area at the outer surface of the protrusions 23 that is engageable with a second surface area on the inside of the cut outs 24, such that the curved plate 21 is fixated on the support part 20. In this example, the shape of the protrusions 23 and corresponding cut outs 24 are mainly rectangular, but other shapes are also envisaged.

The support part 20 and the curved plate 21 are in the preferred embodiment symmetrical with respect to the vertical plane through the central axis of the axle body 1. Other configurations are also possible, but this configuration has the advantage that the support part 20 and the curved plate 21 cannot be mounted in the wrong way.

## Claims

1. An axle suspension of a vehicle comprising:
- an axle body (1) of a wheel of the vehicle,
- a suspension arm (5) extending in longitudinal direction of the vehicle and crossing the axle body (1) substantially perpendicular, said suspension arm (5) having a curved portion (9) at the location of the axle body (1), said axle body (1) being arranged on the concave underside of the curved portion (9) of the suspension arm (5),
- a support part (20) which is located between the axle body (1) and the suspension arm (5), said support part (20) having a recess in which a portion of the axle body (1) is received, and having a side facing the suspension arm (5), said side being substantially adapted to the shape of the concave underside of the curved portion (9) of the suspension arm (5), and being provided with a plurality of protrusions (23) with a bearing surface, and
- clamping means (10),
**characterized in that** the axle suspension further comprises:
- a curved plate (21) made of ductile material, which is located between the support part (20) and the suspension arm (5), said curved plate (21) having a shape adapted to the shape of the concave underside of the curved portion (9) of the suspension arm (5), and being provided with a plurality of cut outs (24) in which the protrusions (23) of the support part (20) are received,
wherein the clamping means (10) clamp the axle body (1), the curved plate (21), the support part (20) and the suspension arm (5) together.

2. The axle suspension according to claim 1, wherein the support part (20) comprises a shell which is shaped as a cylinder section which has an inner radius of curvature which is corresponding substantially with the radius of the axle body (1) and which on the side facing the suspension arm (5) in the region near the tangential ends is provided with noses (25) that match said side with the concave underside of the curved portion (9) of the suspension arm (5).

3. The axle suspension according to claim 1 or 2, wherein the bearing surface of the protrusions (23) is bearing against the underside of the suspension arm (5).

4. The axle suspension according to one of the preceding claims, wherein on either side of the vertical plane through the central axis of the axle body (1) at least one of said protrusions (23) is provided on the support part (20) and the curved plate (21) is provided with at least one of said corresponding cut outs (24).

5. Axle suspension according to one of the preceding claims, wherein the support part (20) and/or the curved plate (21) are symmetrical with respect to the vertical plane through the central axis.

6. Axle suspension according to one of the preceding claims, wherein the curved plate (21) comprises zinc or another anti-corrosive material.

7. Vehicle comprising at least one axle suspension according to claims 1-6.

## Patentansprüche

1. Achsaufhängung eines Fahrzeugs, die umfasst:
- einen Achskörper (1) eines Rades des Fahrzeugs,
- einen Aufhängungsarm (5), der sich in Längsrichtung des Fahrzeugs erstreckt und den Achskörper (1) im Wesentlichen senkrecht kreuzt, wobei der Aufhängungsarm (5) einen gekrümmten Abschnitt (9) an der Position des Achskörpers (1) aufweist und der Achskörper (1) an der konkaven Unterseite des gekrümmten Abschnitts (9) des Aufhängungsarms (5) angeordnet ist,
- einen Trageteil (20), der sich zwischen dem Achskörper (1) und dem Aufhängungsarm (5) befindet, wobei der Trageteil (20) eine Vertiefung aufweist, in der ein Abschnitt des Achskörpers (1) aufgenommen ist, und eine Seite hat, die dem Aufhängungsarm (5) zugewandt ist, wobei die Seite im Wesentlichen der Form der konkaven Unterseite des gekrümmten Abschnitts (9) des Aufhängungsarms (5) entspricht, und er mit einer Vielzahl von Vorsprüngen (23) mit einer Auflagefläche versehen ist, und
- eine Klemmeinrichtung (10),
**dadurch gekennzeichnet, dass** die Achsaufhängung des Weiteren umfasst:
- eine gekrümmte Platte (21), die aus duktilem Material besteht und sich zwischen dem Trageteil (20) und dem Aufhängungsarm (5) befindet, wobei die gekrümmte Platte (21) eine Form hat, die der Form der konkaven Unterseite des gekrümmten Abschnitts (9) des Aufhängungsarms (5) entspricht, und sie mit einer Vielzahl von Ausschnitten (24) versehen ist, in denen die Vorsprünge (23) des Trageteils (20) aufgenommen sind, wobei die Klemmeinrichtung (10) den Achskörper (1), die gekrümmte Platte (21), den Trageteil (20) und den Aufhängungsarm (5) zusammenklemmt.

2. Achsaufhängung nach Anspruch 1, wobei der Trageteil (20) einen Außenschale umfasst, die als ein Zylindersegment geformt ist, das einen Innen-Krümmungsradius hat, der im Wesentlichen dem Radius des Achskörpers (1) entspricht, und das an der dem Aufhängungsarm (5) in dem Bereich in der Nähe der tangentialen Enden zugewandten Seite mit Nasen (25) versehen ist, die der konkaven Unterseite des gekrümmten Abschnitts (9) des Aufhängungsarms (5) entsprechen.

3. Achsaufhängung nach Anspruch 1 oder 2, wobei die Auflagefläche der Vorsprünge (23) an der Unterseite des Aufhängungsarms (5) anliegt.

4. Achsaufhängung nach einem der vorangehenden Ansprüche, wobei auf beiden Seiten der vertikalen Ebene durch die Mittelachse des Achskörpers (1) hindurch wenigstens einer der Vorsprünge (23) an dem Trageteil (20) vorhanden ist und die gekrümmte Platte (21) mit wenigstens einem der entsprechenden Ausschnitte (24) versehen ist.

5. Achsaufhängung nach einem der vorangehenden Ansprüche, wobei der Trageteil (20) und/oder die gekrümmte Platte (21) in Bezug auf die vertikale Ebene durch die Mittelachse hindurch symmetrisch sind.

6. Achsaufhängung nach einem der vorangehenden Ansprüche, wobei die gekrümmte Platte (21) Zink oder ein anderes Korrosionsschutzmaterial umfasst.

7. Fahrzeug, das wenigstens eine Achsaufhängung nach den Ansprüchen 1-6 umfasst.

## Revendications

1. Suspension d'essieu d'un véhicule comprenant :
un corps d'essieu (1) d'une roue du véhicule,
un bras de suspension (5) s'étendant dans la direction longitudinale du véhicule et traversant le corps d'essieu (1) d'une manière sensiblement perpendiculaire, ledit bras de suspension (5) ayant une partie incurvée (9) à l'emplacement du corps d'essieu (1), ledit corps d'essieu (1) étant agencé sur la face inférieure concave de la partie incurvée (9) du bras de suspension (5),
une partie de support (20) qui est positionnée entre le corps d'essieu (1) et le bras de suspension (5), ladite partie de support (20) ayant un évidement dans lequel une partie du corps d'essieu (1) est reçue et ayant un côté faisant face au bras de suspension (5), ledit côté étant sensiblement adapté à la forme de la face inférieure concave de la partie incurvée (9) du bras de suspension (5), et étant prévu avec une pluralité de saillies (23) avec une surface de palier, et
des moyens de serrage (10),
**caractérisée en ce que** la suspension d'essieu comprend en outre :
une plaque incurvée (21) réalisée avec un matériau ductile, qui est positionnée entre la partie de support (20) et le bras de suspension (5), ladite plaque incurvée (21) ayant une forme adaptée à la forme de la face inférieure concave de la partie incurvée (9) du bras de suspension (5), et étant prévue avec une pluralité de découpes (24) dans lesquelles les saillies (23) de la partie de support (20) sont reçues,
dans laquelle les moyens de serrage (10) serrent le corps d'essieu (1), la plaque incurvée (21), la partie de support (20) et le bras de suspension (5) ensemble.

2. Suspension d'essieu selon la revendication 1, dans laquelle la partie de support (20) comprend une coque qui est formée comme une section cylindrique qui a un rayon de courbure interne qui correspond sensiblement au rayon du corps d'essieu (1) et qui, sur le côté faisant face au bras de suspension (5) dans la région à proximité des extrémités tangentielles, est prévue avec des nez (25) qui correspondent audit côté avec la face inférieure concave de la partie incurvée (9) du bras de suspension (5).

3. Suspension d'essieu selon la revendication 1 ou 2, dans laquelle la surface de palier des saillies (23) est supportée contre la face inférieure du bras de suspension (5).

4. Suspension d'essieu selon l'une quelconque des revendications précédentes, dans laquelle de chaque côté du plan vertical, en passant par l'axe central du corps d'essieu (1), au moins l'une desdites saillies (23) est prévue sur la partie de support (20) et la plaque incurvée (21) est prévue avec au moins l'une desdites découpes (24) correspondantes.

5. Suspension d'essieu selon l'une quelconque des revendications précédentes, dans laquelle la partie de support (20) et/ou la plaque incurvée (21) sont symétriques par rapport au plan vertical passant par l'axe central.

6. Suspension d'essieu selon l'une quelconque des revendications précédentes, dans laquelle la plaque incurvée (21) comprend du zinc ou un autre matériau anticorrosif.

7. Véhicule comprenant au moins une suspension d'essieu selon l'une quelconque des revendications 1 à 6.
